# EUROPEAN PATENT APPLICATION

(11) **EP 4 563 838 A1**
(43) Date of publication of application: **04.06.2025**
(21) Application number: 24203998.0
(22) Date of filing: 01.10.2024
(51) Int. Cl.: F16D 11/14, F16D 1/10

(54) **PNEUMATIC AND MANUALLY DRIVEN DISCONNECT MECHANISM FOR MECHANICALLY SEPARATING A POWER TRAIN**

(30) Priority: 01.12.2023 US 202318526515
(71) Applicant: Hamilton Sundstrand Corporation, Charlotte, NC 28217-4578 (US)
(72) Inventor: KOEHLER, Matthew Daniel, Rockford, IL (US); CRAIG, Nicholas, Austin, TX (US)
(74) Representative: Dehns

(57) **Abstract**

A system includes a first shaft assembly (102) and a second shaft (104) splined to the first shaft assembly with the first shaft in a first axial position for common rotation of the first shaft assembly and the second shaft. In a second axial position of the first shaft assembly, the first shaft assembly and the second shaft are separated for disconnecting them from common rotation. The first shaft assembly includes a piston (128) in a pneumatic chamber (130) configured so that pressurizing a first compartment (134) of the pneumatic chamber on a first side of the pneumatic piston actuates the first shaft assembly axially toward the first position, and pressurizing a second compartment (132) of the pneumatic chamber on a second side of the piston opposite the first side of the piston actuates the first shaft assembly axially toward the second position.

## Description

### STATEMENT OF GOVERNMENT RIGHTS

This invention was made with government support under Contract No. SPE4AX-18-D-9407-FA8212-22-F-0003 awarded by the United States Air Force. The government has certain rights in the invention.

### BACKGROUND

### 1. Field

The present disclosure relates to disconnect mechanisms, and more particularly to mechanical disconnects for disconnecting power trains, such as can be used for disconnecting actuators, gearboxes, prime movers, accessories, and the like, aboard aircraft.

### 2. Description of Related Art

In power transmission devices, such as a gearboxes aboard aircraft, it is often necessary to include a mechanism that can mechanically separate two power train shafts that carry a rotational load between them. This can be done for a multitude of reasons including needing to run either the upstream or downstream components without driving the entire system and disconnecting the sections in the event that one component fails.

The conventional techniques have been considered satisfactory for their intended purpose. However, there is an ever present need for improved systems and methods for mechanical disconnects. This disclosure provides a solution for this need.

### SUMMARY

A system includes a first shaft assembly and a second shaft splined to the first shaft assembly with the first shaft in a first axial position for common rotation of the first shaft assembly and the second shaft. In a second axial position of the first shaft assembly, the first shaft assembly and the second shaft are separated for disconnecting them from common rotation together. The first shaft assembly includes a piston in a pneumatic chamber configured so that pressurizing a first compartment of the pneumatic chamber on a first side of the pneumatic piston actuates the first shaft assembly axially toward the first position, and pressurizing a second compartment of the pneumatic chamber on a second side of the piston opposite the first side of the piston actuates the first shaft assembly axially toward the second position.

The second shaft can include a spur gear configured to connect the second shaft for rotation together with an airframe mounted accessory drive (AMAD). The first shaft assembly can include a first set of splines extending radially outward. The second shaft can include a second set of splines extending radially inward. The first set of splines can engage the second set of splines with the first shaft assembly in the first position. The first shaft assembly can include a decoupler bearing engaging the first set of splines to a decoupling shaft of the first shaft assembly for rotation of the decoupling shaft relative to the first set of splines. The first set of splines can be defined on a coupling shaft of the first shaft assembly that is operatively connected to a power input shaft for driving the first and second shafts with rotational power from a prime mover with the first shaft assembly in the first position. An anti-rotation pin can be mounted in the solenoid housing, wherein the anti-rotation pin is engaged in a diametrical groove through a first end of the decoupling shaft to prevent rotation of a decoupling shaft of the first shaft assembly relative to the housing for pneumatic operation. The anti-rotation pin can be configured to be manually removed from the solenoid housing for manual rotation of the decoupling shaft of the first shaft assembly relative to a coupling shaft of the decoupling shaft as needed, e.g. for maintenance. A set of axially extending helical threads can be included in the first end of the decoupling shaft configured to engage a bolt to facilitate manual axial actuation of the first shaft assembly to the second position.

A first solenoid valve can be in fluid communication with the first compartment for selectively pressuring the first compartment to drive the piston to actuate the first shaft assembly toward the first position. A second solenoid valve can be in fluid communication with the second compartment for selectively pressurizing the second compartment to drive the piston to actuate the first shaft assembly toward the second position. The second solenoid valve can be configured to release pressure from the second compartment to allow movement of the piston toward the first position. The first solenoid valve can be configured to release pressure from the first compartment to allow movement of the piston toward the second position. The first solenoid valve and second solenoid valve can each be mounted to a solenoid housing that defines the pneumatic chamber.

A first locking piston can be engaged to the solenoid housing and operatively connected to the first compartment. The first locking piston can be biased radially inward to engage a first groove in the first shaft assembly to lock the first shaft assembly in the second position. The first locking piston can be configured to move radially outward against its bias with the first solenoid pressurizing the first compartment, to disengage the first locking piston from the first groove to allow axial movement of the first shaft. A first locking piston switch can be mounted to the solenoid housing and operatively connected to the first locking piston to switch between a first switching state with the first locking piston engaged to the first groove, and a second switching state with the first locking piston disengaged from the first groove for use as an electrical sensor for detecting state of the first shaft assembly.

A second locking piston can be engaged to the solenoid housing and operatively connected to the second compartment. The second locking piston can be biased radially inward to engage a second groove in the first shaft assembly to lock the first shaft assembly in the first position. The second locking piston can be configured to move radially outward against its bias with the second solenoid pressurizing the second compartment, to disengage the second locking piston from the second groove to allow axial movement of the first shaft assembly. A second locking piston switch can be mounted to the solenoid housing and operatively connected to the second locking piston to switch between a first switching state with the second locking piston engaged to the second groove, and a second switching state with the second locking piston disengaged from the second groove for use as an electrical sensor for detecting state of the first shaft assembly. A controller can be operatively connected to the first solenoid and to the second solenoid for remote actuation of the first shaft assembly back and forth between the first and second positions.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic cross-sectional side elevation view of an embodiment of a system constructed in accordance with the present disclosure, showing the first and second shafts engaged for common rotation;
Fig. 2 is a schematic cross-sectional side-elevation view of the system of Fig. 1, showing the first and second shafts disconnected;
Fig. 3 is a schematic cross-sectional side-elevation view of a portion of the system of Fig. 1, showing the locking pistons;
Fig. 4 is a perspective view of the system of Fig. 1, showing the solenoid housing externally; and
Fig. 5 is a schematic perspective view of the system of Fig. 4, showing solenoid housing internals.

### DETAILED DESCRIPTION OF THE PREFERRED EMBODIMENTS

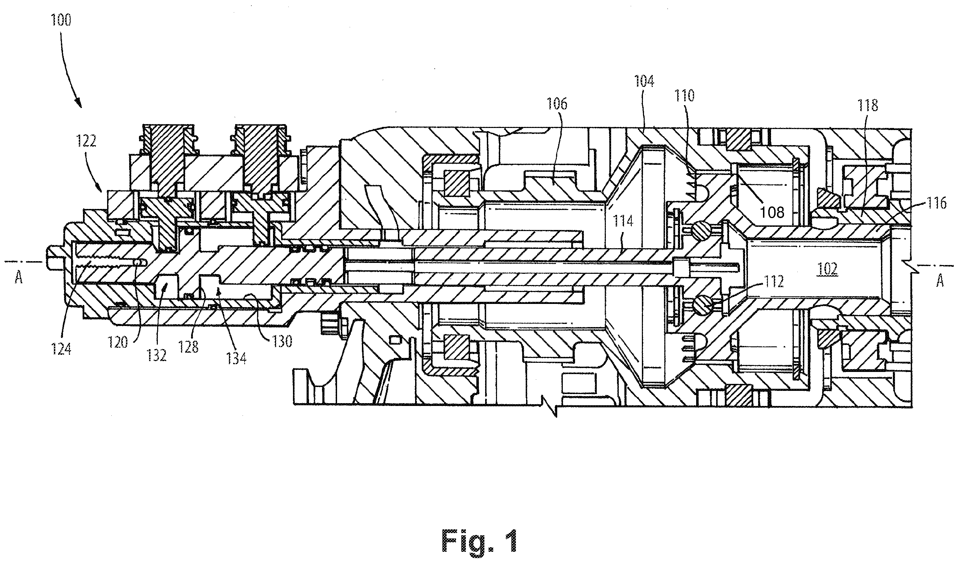

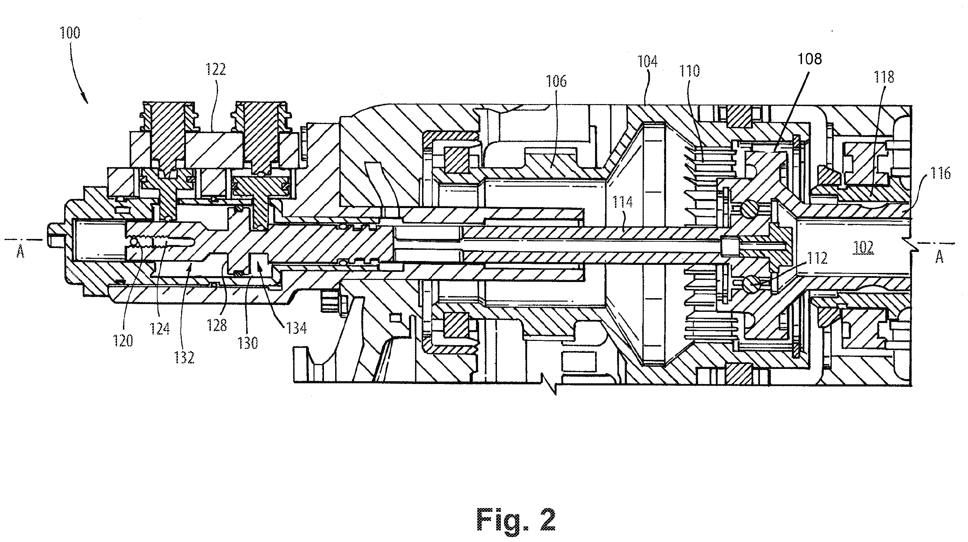

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. Other embodiments of systems in accordance with the disclosure, or aspects thereof, are provided in Figs. 2-5, as will be described. The systems and methods described herein can be used to provide for both pneumatic, remotely controlled, actuation of a disconnect mechanism, as well as manual actuation of the disconnect mechanism.

The system 100 disclosed herein mechanically separates two rotating shafts, in both static and loaded operation, through a remote command. In this case the decoupler is configured for an Airframe Mounted Accessory Drive (AMAD) such that the gearbox can be disconnected from the input shaft on command, however, those skilled in the art will readily appreciate that any other suitable disconnect application can be used. This can be particularly useful for the following events common in such a system: maintenance or operation of one side without driving the other, and emergency disconnect such as while operating at maximum load to allow continued function of one side. The decoupler is centered around a spline that connects the input shaft to the drive shaft. When coupled the splines are engaged, when decoupled the spline shifts axially to a completely disengaged position allowing for both the input shaft and drive shaft to spin independently. The actuation is completed by a pneumatically driven piston system with sensors to reflect the current state of the decoupler.

The system 100 includes a first shaft assembly 102 and a second shaft 104 splined to the first shaft assembly when the first shaft assembly is in a first axial position relative to the longitudinal axis A defined by the shafts 102, 104. This position is shown in Fig. 1, and is for common rotation of the first and second shafts 102, 104, i.e. in the coupled state. In a second axial position of the first shaft assembly 102, the first shaft assembly 102 and the second shaft 104 are separated for disconnecting the first and second shafts 102, 104 for the decoupled state. The decoupled state is shown in Fig. 2.

With continued reference to Figs. 1 and 2, the second shaft 104 includes a spur gear 106 configured to connect the second shaft for rotation together with an airframe mounted accessory drive (AMAD). The first shaft assembly 102 includes a first set of splines 108 extending radially outward from the coupling shaft 116 of the first shaft assembly 102. The second shaft 104 includes a second set of splines 110 extending radially inward. The first set of splines 108 engages the second set of splines 110 with the first shaft assembly 102 in the first position as shown in Fig. 1. The splines 108, and 110 are axially spaced apart in the decoupled state shown in Fig. 2. The first shaft assembly 102 includes a decoupler bearing 112 engaging the first set of splines 108 to a decoupling shaft 114 of the first shaft assembly 102 for rotation of the decoupling shaft 114 relative to the first set of splines 108. During coupled rotation of the shafts 104, 116, the decoupling shaft 114 of the first shaft assembly 102 does not rotate relative to the solenoid housing 122, while the coupling shaft 116 of the first shaft assembly 102 rotates relative to the decoupling shaft 114 accommodated by the decoupler bearing 112. The bearing 112 can also accommodate rotation as needed for manual disengagement of the first shaft assembly 102 from the second shaft 104.

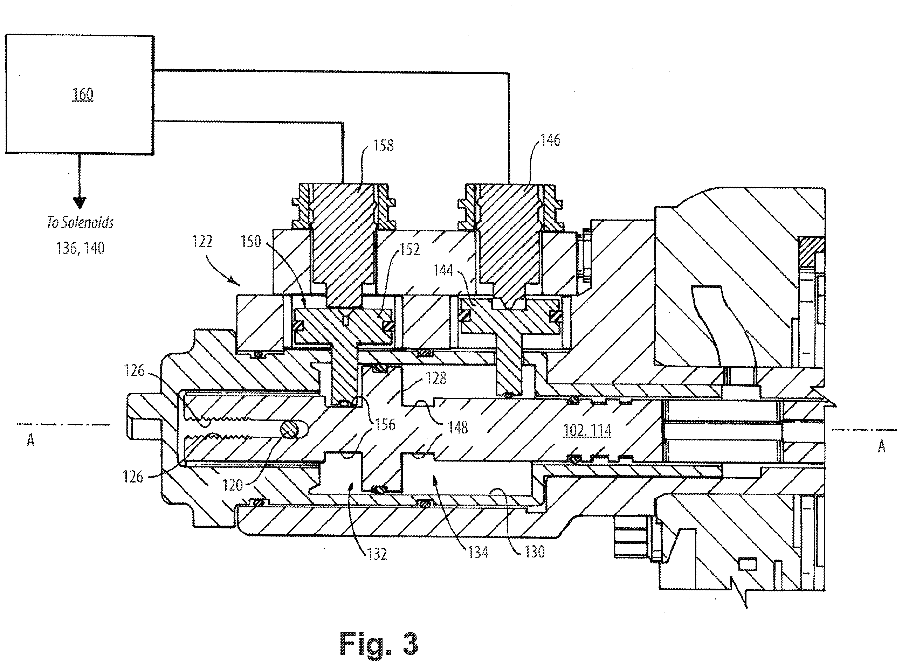

The first set of splines 108 are defined on a coupling shaft 116 of the first shaft assembly 102 that is operatively connected to a power input shaft 118 used for driving the coupled shafts 104, 116 with rotational power from a prime mover with the first shaft assembly 102 in the first position shown in Fig. 1. An anti-rotation pin 120 is mounted in the solenoid housing 122 of the system 100. The anti-rotation pin 120 is mounted in the pressure cap 176, which is installed into the solenoid housing 122 of the system 100. The anti-rotation pin 120 is engaged in a diametrical groove 124 through a first end of the decoupling shaft 114 to prevent rotation of the decoupling shaft 114 of the first shaft assembly 102 relative to solenoid housing 122 for pneumatic operation. The anti-rotation pin 120 is configured to be manually removed from the solenoid housing 122 for manual rotation of the decoupling shaft 114 of the first shaft assembly 102 relative to the coupling shaft 116 of the first shaft assembly 102 as needed, e.g. for maintenance. A set of axially extending helical threads 126 (labeled in Fig. 3) in the first end of the decoupling shaft 114 are configured to engage a threaded bolt to facilitate manual axial actuation of the first shaft assembly to the second position of Fig. 2 to manually disengage the splines 108, 110.

The decoupling shaft 114 includes a piston 128 in a pneumatic chamber 130 configured so that pressurizing a first compartment 134 of the pneumatic chamber on a first side of the pneumatic piston 128 actuates the first shaft assembly 102 axially toward the first position of Fig. 1, and pressurizing a second compartment 132 of the pneumatic chamber 130 on a second side of the piston 128 opposite the first side of the piston 128 actuates the first shaft assembly 102 axially toward the second position of Fig. 2.

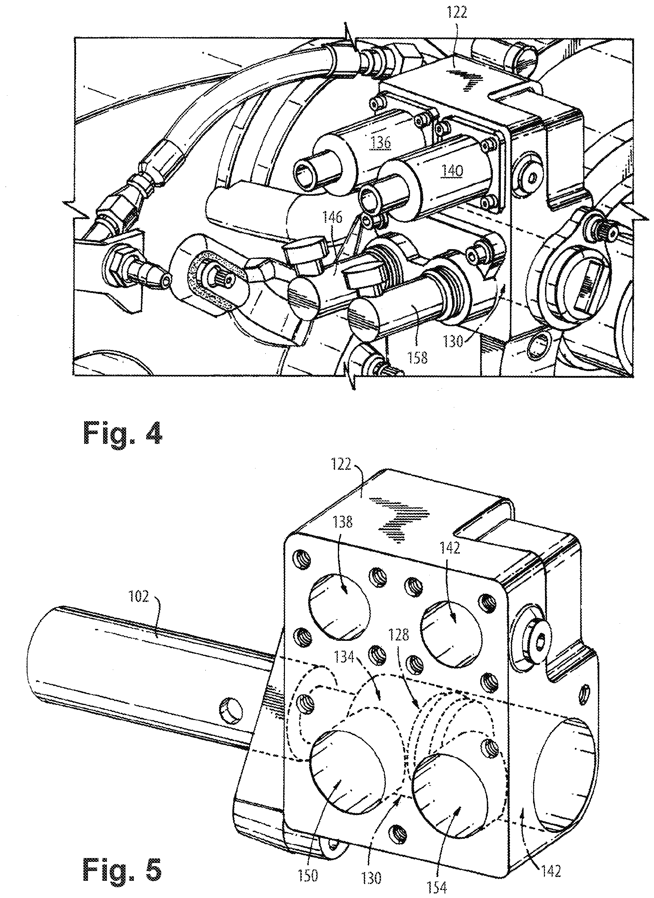

With reference to Fig. 4-5 (where Fig. 4 shows an external view and Fig. 5 schematically shows internals), a first solenoid valve 136 is in fluid communication with the first compartment 134 (labeled in Figs. 1-3) through a solenoid passage 138 for selectively pressuring the first compartment 134 to drive the piston 128 to actuate the first shaft assembly 102 toward the first position of Fig. 1. A second solenoid valve 140 is in fluid communication through a solenoid passage 142 with the second compartment 132 for selectively pressurizing the second compartment 132 to drive the piston 128 to actuate the first shaft assembly 102 toward the second position as shown in Fig 2. The second solenoid valve 140 is configured to release pressure from the second compartment 132 to allow movement of the piston 128 toward the first position shown in Fig. 1. Similarly, the first solenoid valve 136 is configured to release pressure from the first compartment 134 to allow movement of the piston 128 toward the second position shown in Fig. 2. The first solenoid valve 136 and second solenoid valve 140 are each mounted to the solenoid housing 130, which defines the pneumatic chamber 130.

With reference now to Fig. 3, a first locking piston 144 is engaged to the solenoid housing 122 in a piston chamber 150 and is operatively connected to the first compartment 134. The first locking piston 144 is biased radially inward, e.g. by a spring in switch 146, to engage a first groove 148 in the first shaft assembly to lock the first shaft assembly in the second position as shown in Fig. 2. The first locking piston 144 is configured to move radially outward against its bias with the first solenoid 136 (shown in Fig. 4) pressurizing the first compartment 134, to disengage the first locking piston 144 from the first groove 148 to allow axial movement of the first shaft assembly 102 out of the second position shown in Fig. 2. The first locking piston switch 146 is mounted to the solenoid housing 122 and operatively connected to the first locking piston 144 to switch between a first switching state with the first locking piston 144 engaged to the first groove 148, and a second switching state with the first locking piston 144 disengaged from the first groove 148 for use as an electrical sensor for detecting state/position of the first shaft assembly 102.

A second locking piston 152 is engaged in a piston chamber 154 (labeled in Fig. 5) of the solenoid housing 122 and is operatively connected to the second compartment 132. The second locking piston 152 is biased, e.g. by a spring in the switch 158, radially inward to engage a second groove 156 in the first shaft assembly 102 to lock the first shaft assembly 102 in the first position shown in Figs. 1 and 3. The second locking piston 152 is configured to move radially outward against its bias with the second solenoid 140 (labeled in Fig. 4) pressurizing the second compartment 132, to disengage the second locking piston 152 from the second groove 156 to allow axial movement of the first shaft assembly 102 away from the first position of Figs. 1 and 3. The second locking piston switch 158 is mounted to the solenoid housing 122 and operatively connected to the second locking piston 152 to switch between a first switching state with the second locking piston 152 engaged to the second groove 156, and a second switching state with the second locking piston 152 disengaged from the second groove 156 for use as an electrical sensor for detecting state of the first shaft assembly 102. A controller 160 is operatively connected to the first and second solenoids 136, 140 for remote actuation of the first shaft assembly 102 back and forth between the first and second positions to couple/decouple the splines 108, 110 as indicated in Figs. 1-2. The controller 160 is also operatively connected to both switches 146, 158 for confirming state of the first shaft assembly 102, e.g. for remotely determining the state of the decoupling shaft 114 among or between the first and second positions.

Systems and methods as disclosed herein provide potential benefits including the following. They can significantly reduce overall decoupler cost and weight relative to traditional configurations. They can reduce the chances of interference during coupling. They add functionality for manually actuating the decoupler, with no specialized tooling required for manual actuation. They can be particularly valuable for flight critical systems that require external power to actuate.

The methods and systems of the present disclosure, as described above and shown in the drawings, provide for both pneumatic, remotely controlled, actuation of a disconnect mechanism, as well as manual actuation of the disconnect mechanism. While the apparatus and methods of the subject disclosure have been shown and described with reference to preferred embodiments, those skilled in the art will readily appreciate that changes and/or modifications may be made thereto without departing from the scope of the subject disclosure.

## Claims

1. A system comprising:
a first shaft assembly (102); and
a second shaft (104) splined to the first shaft assembly with the first shaft assembly in a first axial position for common rotation of the first shaft assembly and the second shaft, wherein in a second axial position of the first shaft assembly, the first shaft assembly and the second shaft are separated for disconnecting the first shaft assembly and the second shaft for separate relative rotation to one another;
wherein the first shaft assembly includes a pneumatic piston (128) in a pneumatic chamber (130) configured so that:
pressurizing a first compartment (134) of the pneumatic chamber on a first side of the pneumatic piston actuates the first shaft assembly axially toward the first position, and
pressurizing a second compartment (132) of the pneumatic chamber on a second side of the piston opposite the first side of the pneumatic piston actuates the first shaft assembly axially toward the second position.

2. The system as recited in claim 1, wherein the second shaft (104) includes a spur gear (106) configured to connect the second shaft for rotation together with an airframe mounted accessory drive, AMAD.

3. The system as recited in clam 1 or 2, further comprising a first solenoid valve (136) in fluid communication with the first compartment for selectively pressuring the first compartment (134) to drive the piston (128) to actuate the first shaft assembly (102) toward the first position.

4. The system as recited in claim 3, further comprising a second solenoid valve (140) in fluid communication with the second compartment (132) for selectively pressurizing the second compartment to drive the piston to actuate the first shaft assembly (102) toward the second position.

5. The system as recited in claim 4, wherein the first solenoid valve (136) is configured to pressurize the first compartment (134) to allow movement of the piston (128) toward the first position.

6. The system as recited in claim 4 or 5, wherein the second solenoid valve (140) is configured to pressurize the second compartment (132) to allow movement of the piston toward the second position.

7. The system as recited in claim 4, 5 or 6, wherein the first solenoid valve (136) and second solenoid valve (140) are each mounted to a solenoid housing (122) that defines the pneumatic chamber (130).

8. The system as recited in claim 4, 5, 6 or 7, further comprising a first locking piston (144) engaged to the solenoid housing (122) and operatively connected to the first compartment (134), wherein the first locking piston is biased radially inward to engage a first groove (148) in the first shaft assembly to lock the first shaft assembly in the second position.

9. The system as recited in claim 8, wherein the first locking piston (144) is configured to move radially outward against its bias with the first solenoid pressurizing the first compartment (134), to disengage the first locking piston from the first groove (148) to allow axial movement of the first shaft assembly; and optionally: further comprising a first locking piston switch (146) mounted to the solenoid housing and operatively connected to the first locking piston (144) to switch between a first switching state with the first locking piston engaged to the first groove (148), and a second switching state with the first locking piston disengaged from the first groove for use as an electrical sensor for detecting state of the first shaft assembly.

10. The system as recited in claim 7, further comprising a second locking piston (152) engaged to the solenoid housing (122) and operatively connected to the second compartment (132), wherein the second locking piston is biased radially inward to engage a second groove (156) in the first shaft assembly to lock the first shaft assembly in the first position.

11. The system as recited in claim 10, wherein the second locking piston (152) is configured to move radially outward against its bias with the second solenoid pressurizing the second compartment (132), to disengage the second locking piston from the second groove to allow axial movement of the first shaft assembly; and optionally further comprising a second locking piston switch mounted to the solenoid housing and operatively connected to the second locking piston to switch between a first switching state with the second locking piston engaged to the second groove (156), and a second switching state with the second locking piston disengaged from the second groove for use as an electrical sensor for detecting state of the first shaft assembly.

12. The system as recited in claim 7, further comprising a controller (160) operatively connected to the first solenoid (136) and to the second solenoid (140) for remote actuation of the first shaft assembly back and forth between the first and second positions.

13. The system as recited in claim 7, wherein the first shaft assembly (102) includes a first set of splines (108) extending radially outward, and wherein the second shaft (104) includes a second set of splines (110) extending radially inward, wherein the first set of splines engages the second set of splines with the first shaft assembly in the first position.

14. The system as recited in claim 13, wherein the first shaft assembly (102) includes a decoupler bearing (112) engaging the first set of splines to a decoupling shaft of the first shaft assembly for rotation of the decoupling shaft relative to the first set of splines (108); and optionally wherein the first set of splines are defined on a coupling shaft of the first shaft assembly that is operatively connected to a power input shaft for driving the first and second shafts with rotational power from a prime mover with the first shaft assembly in the first position.

15. The system as recited in claim 1, further comprising an anti-rotation pin (20) mounted in the solenoid housing (122), wherein the anti-rotation pin is engaged in a diametrical groove (124) through a decoupling shaft of the first shaft assembly to prevent rotation of a decoupling shaft of the first shaft assembly relative to a housing for pneumatic operation; and optionally wherein the anti-rotation pin is configured to be manually removed from the solenoid housing for manual rotation of the decoupling shaft of the first shaft assembly relative to a coupling shaft of the first shaft assembly; and optionally further comprising a set of axially extending helical threads (126) in the first end of the decoupling shaft configured to engage a bolt to facilitate manual axial actuation of the first shaft assembly (102) to the second position.
